# EUROPÄISCHE PATENTSCHRIFT

(11) **EP 1 952 963 B1**
(45) Veröffentlichungstag und Bekanntmachung des Hinweises auf die Patenterteilung: **06.04.2011**
(21) Anmeldenummer: 07101678.6
(22) Anmeldetag: 02.02.2007
(51) Int. Cl.: B29C 45/00, B29C 45/16

(54) **Spritzgießen eines Auskleidungsteils für Motorfahrzeuge**
Injection moulding of a facing part for motor vehicles
Moulage par injection d'une pièce d'habillage de véhicules à moteur

(43) Veröffentlichungstag der Anmeldung: 06.08.2008
(73) Patentinhaber: Novem Car Interior Design GmbH, 95519 Vorbach (DE)
(72) Erfinder: Lauterbach, Stefan, 95445, Bayreuth (DE); Abach, Andreas, 90419, Nürnberg (DE); Egerer, Gerhard, 92724, Trabitz (DE)
(74) Vertreter: Szynka, Dirk

(56) Entgegenhaltungen:
- DE-A1- 10 250 765
- FR-A1- 2 260 441
- JP-A- 2004 017 629
- US-A1- 2004 017 023
- US-A1- 2006 068 206
- "DOUBLE-SHOT MOLD AND GRIND METHOD FOR PRODUCING KEYBUTTON NOMENCLATURE" IBM TECHNICAL DISCLOSURE BULLETIN, IBM CORP. NEW YORK, US, Bd. 22, Nr. 6, November 1979 (1979-11), Seiten 2387-2388, XP001173693 ISSN: 0018-8689

## Beschreibung

Die vorliegende Erfindung bezieht sich auf ein Verfahren und ein Spritzgießwerkzeug zur Herstellung eines Auskleidungsteils für Motorfahrzeuge.

Auskleidungsteile für Motorfahrzeuge sind weit verbreitet. Sie finden bei der Inneneinrichtung von Motorfahrzeugen Anwendung. Ein typisches Auskleidungsteil ist etwa ein eine Holzmaserung aufweisendes Dekorationselement für ein Armaturenfeld in einem Auto. Unter dem Wort "Motorfahrzeuge" werden hier alle motorisierten Land-, Wasser- oder Luftfahrzeuge mit einem Innenraum zur Beförderung von Personen verstanden.

Oft werden solche Auskleidungsteile spritzgegossen. Üblich ist es auch, einen zuvor gefertigten Rohling mittels Spritzgießen zu beschichten.

Ein übliches Spritzgießwerkzeug ist so gebaut, dass es im geschlossenen Zustand eine Kavität aufweist. Während des Betriebs wird die Kavität unter Druck und Wärmezufuhr mit einem Spritzgießmaterial gefüllt. Üblicherweise werden thermoplastische Kunststoffe als Spritzgießmaterial verwendet. Duroplastische Kunststoffe könnten jedoch grundsätzlich auch verwendet werden.

Im Anschluss an das Füllen der Kavität (und ggf. nach einer Abkühl- oder Aushärtezeit) kann das Spritzgießwerkzeug geöffnet und das Spritzgießteil aus dem Spritzgießwerkzeug entfernt werden.

Manchmal soll ein fertiges Spritzgießteil eine Aufmachung aufweisen, welche den Eindruck mehrerer Bestandteile erweckt; es kann etwa der Eindruck eines schichtartigen Aufbaus gewünscht sein. Hier ist es bekannt, die Auskleidungsteile seitlich mehrfarbig zu lackieren. Beispielsweise ist es bekannt, flächige Auskleidungsteile in einem holzfarbenen Grundton herzustellen und an den Kanten der Auskleidungsteile Streifen in einem anderen holzfarbenen Ton aufzutragen. So kann der Eindruck vermittelt werden, das flächige Auskleidungsteil sei aus einem Stapel Holzschichten aufgebaut.

Die US 200410017023 A1 zeigt ein zweistufiges Verfahren zur Herstellung von Spritzgussteilen zur Innenverkleidung von Motorfahrzeugen. Das Spritzgusswerkzeug bildet eine flächige Kavität, in die ein beweglicher Stempel hineinragt. Im ersten Verfahrenschritt wird die flächige Kavität ausgegossen, dann der Stempel zurückgezogen, wodurch sich eine weitere Kavität aus der Stempelfläche einerseits und dem Hohlraum im ersten Spritzgussanteil andererseits bildet, woraufhin die entstandene zweite Kavität mit einem zweiten Material ausgegossen wird.

Die DE 102 50 765A1 zeigt ein zu dem eben beschriebenen analoges Verfahren, wobei der Stempel die erste Kavität in zwei Teile trennt, welche nach Zurückziehen des Vorsprungs und Vergießen der zweiten Kavität mittels des zweiten Spritzgussmaterials wieder verbunden werden.

Die FR 2 260 441 A1 zeigt ein Verfahren zur Herstellung eines Gussgegenstandes welches ein stereoskopisches Muster auf einer glatten Oberfläche aufweist Hierzu werden in der ersten Kavität reliefartige Einkerbungen so ausgegossen, dass im später ausgehärteten Material ausgerichtete Fließmarkierungen entstehen, die einfallendes Licht in einer zur Erzeugung des gewünschten stereoskoplschen Musters geeigneten Weise reflektieren. Die reliefartigen Vorsprünge der ersten Kavität können in einem zweiten Arbeitsschritt mit einem weiteren Gussmaterial ausgegossen werden, wodurch sich kompliziertere stereoskopische Muster ergeben können. Abschließend wird das Spritzgussteil plangeschliffen.

Die Schrift "DOUBLE-SHOT MOLD AND GRIND METHOD FOR PRODUCING KEYBUTTON NOMENCLATURE", IBM TECHNICAL DISCLOSURE BULLETIN, November 1979, US, Vol 22, Nr. 6, 2387 - 2388, zeigt ein Verfahren zur Herstellung von beschrifteten Kappen für die Tasten von Tastaturen. In einem ersten Schritt wird ein Grundkörper gegossen, der das gewünschte Tastknopfzeichen als reliefartige Ausstülpung trägt. In einem zweiten Schritt wird dann der Grundkörper vergossen, so dass das Zeichenrelief des Grundkörpers vollständig mit der zweiten Spritzgussmasse bedeckt ist. In einem dritten Verfahrenschritt wird dann das zweite Spritzgussmaterial so heruntergeschliffen, dass das Relief im Grundkörper wieder sichtbar ist. Die JP 2004 01 76 29A zeigt ein zweistufiges Spritzgussverfahren worin eine zweite Kavität durch Herausziehen eines Vorsprungs aus einer zuvor vergossenen ersten Kavität entsteht, und diese in einem zweiten Verfahrenschritt vergossen wird, gemäß dem Oberbegriff des Anspruchs 1.

Die Erfindung bezieht sich auf ein Verfahren zur Herstellung eines Auskleidungsteils für Motorfahrzeuge gemäß dem Anspruch 1.

Die Erfindung bezieht sich gleichermaßen auf ein entsprechend ausgestaltetes Spritzgießwerkzeug gemäß dem Anspruch 11.

Bevorzugte Ausgestaltungen der Erfindung sind in den abhängigen Ansprüchen angegeben und werden im Folgenden näher erläutert. Die Offenbarung bezieht sich dabei stets sowohl auf das erfindungsgemäße Verfahren als auch auf ein Spritzgießwerkzeug zur Durchführung des erfindungsgemäßen Verfahrens.

Der Erfindung liegt die Idee zugrunde, ein Spritzgießteil aus mehreren Anteilen aufzubauen, wobei zumindest ein Anteil des fertig ausgehärteten Spritzgleßteils einen anderen optischen Eindruck hervorruft als ein anderer Anteil. Der unterschiedliche optisch Eindruck kann insbesondere durch eine unterschiedliche Farbgebung der Anteile gegeben sein. Eine Beeinflussung des optischen Eindrucks über andere Eigenschaften, etwa die Textur oder die Reflektivität, kann grundsätzlich allerdings auch infrage kommen.

Dazu wird eine erste Kavität in einem Spritzgießwerkzeug ausgebildet, in die ein Vorsprung des Spritzgießwerkzeuges hineinragt, sodass der erste Anteil des Spritzgießteils nach seinem Spritzguss eine dem Vorsprung entsprechende Hohlform aufweist. Der Vorsprung kann sich etwa in zumindest einer Ebene verjüngen oder aber auch länglich gestreckt sein. Weiter wird eine zweite Kavität ausgebildet, welche zumindest einen Teil der Hohlform des ersten Anteils des Spritzgießteils umfasst Diese zweite Kavität kann in dem gleichen Spritzgießwerkzeug liegen, was bevorzugt ist (siehe unten), sie kann allerdings auch in einem zweiten Spritzgießwerkzeug ausgebildet sein. Die zweite Kavität wird mit einem zweiten Spritzgleßmaterial gefüllt, und da sie zumindest einen Teil der Hohlform des ersten Anteils umfasst, wird die Hohlform mit dem zweiten Spritzgleßmaterial zumindest in diesem Teil gefüllt. Die zweite Kavität umfasst etwa nur dann einen Teil der Hohlform des ersten Anteils des Spritzgießteils, wenn etwa ein Vorsprung aus der Umwandung der zweiten Kavität ein Stück weit in die Hohlform des ersten Anteils des Spritzgießteils hineinragt Insbesondere soll aber auch der Fall inbegriffen sein, dass sie die Hohlform des ersten Anteils des Spritzgießteils in ihrer Gesamtheit umfasst und ggf. auch ein noch größeres Volumen. In diesem Fall würde die Hohlform in ihrer Gesamtheit mit dem zweiten Spritzgießmaterial ausgefüllt werden und würde ggf. der zweite Anteil des Spritzgießteils aus der Hohlform des ersten Anteils des Spritzgießteils hinausragen.

Der in die erste Kavität hineinragende Vorsprung ist erfindungsgemäß streifenförmig lang gestreckt. Bei entsprechender Platzierung und Farbwahl für die Anteile des Spritzgießteils kann dies den Eindruck vermitteln, als ob das Auskleidungsteil an dieser Stelle eine Grenzschicht aufweist, bzw. aus mehreren Materialien aufgebaut ist. Ferner ist die erste Kavität erfindungsgemäß flächig. Das heißt sie weist in zwei Dimensionen eine größere Ausdehnung als in der verbleibenden dritten Dimension auf. Eine flächige Kavität muss kein einfach zusammenhängender Hohlraum sein. Es können etwa auch Wände in den Hohlraum hineinragen bzw. Stifte durch diesen hindurch gehen. Ein in einer solchen Kavität hergestelltes Spritzgussteil kann etwa Schlitze und Aussparungen aufweisen. Die Seiten eines flächigen Gegenstandes parallel zu der Dimension mit der geringsten Ausdehnung werden gemeinhin Kanten genannt. Erstreckt sich der streifenförmig lang gestreckte Vorsprung entlang einer solchen Kante, also etwa die große Fläche umfassend, so ist dies besonders gut dazu geeignet, den Eindruck eines schichtartigen Aufbaus des Spritzgießteils hervorzurufen.

Vorzugsweise umfasst die zweite Kavität die gesamte Hohlform des ersten Anteils des Spritzgießteils und auch noch ein darüber hinaus gehendes Volumen. Es ist entsprechend bevorzugt, einen solchen aus der Hohlform des ersten Anteils hervor ragenden Überschuss des zweiten Anteils abzutragen. Besonders bevorzugt ist es, wenn der Überschuss so weit abgetragen wird, dass der zweite Anteil die Hohlform ausfüllt, jedoch nicht mehr aus der Hohlform hervor ragt.

Der aus der Hohlform des ersten Anteils des Spritzgießteils hervor ragende Überschuss kann beispielsweise abgefräst, abgeschnitten oder abgeschliffen werden.

Das Abtragen selber kann mit Toleranzen verbunden sein. Um sicherzustellen, dass der erste Anteil des Spritzgießteils und der zweite Anteil des Spritzgießteils bündig eine gemeinsame Oberfläche ausbilden, ist es bevorzugt, auch einen Teil der Oberfläche des ersten Anteils abzutragen, in die die Hohlform eingebettet ist.

Vorzugsweise werden dabei von der Oberfläche des ersten Anteils des Spritzgießteils bis zu 0,5 mm abgetragen. Lässt das Abtragungswerkzeug eine höhere Genauigkeit zu, so ist es in der angegebenen Reihenfolge zunehmend bevorzugt von der Oberfläche des ersten Anteils des Spritzgießteils bis zu 0,2 mm, 0,1 mm und 0,05 mm abzutragen.

Weiter wird vorzugsweise das Spritzgießen des ersten Anteils des Spritzgießteils und des zweiten Anteils des Spritzgießteils in demselben Spritzgießwerkzeug durchgeführt. Dazu wird in demselben Spritzgießwerkzeug zunächst die erste Kavität ausgebildet und nach dem Spritzgießen des ersten Anteils des Spritzgießteils die zweite Kavität.

Um ausgehend von einer ersten in dem Spritzgießwerkzeug vorhandenen Kavität eine zweite zu bilden, ist es bevorzugt, das Spritzgießwerkzeug aus drei Formen zusammenzusetzen. Diese drei Formen bilden zunächst zusammen die erste Kavität; die zweite Kavität wird durch Verschieben einer der drei Formen gebildet.

Vorzugsweise weisen das erste Spritzgießmaterial und das zweite Spritzgießmaterial das gleiche Material als Hauptbestandteil auf. Der Hauptbestandteil macht mehr als 50 % des jeweiligen Massenanteils aus; bevorzugter sind 75 %, 90 %, 95 %, 97 %, 99 % und 99,8 % in der angegebenen Reihenfolge. Weisen beide Spritzgießmaterialien das gleiche Material als Hauptbestandteil auf, kann sich dies positiv auf die Langzeitstabilität des Auskleidungsteils auswirken, etwa weil die Ausdehnungsänderung in Abhängigkeit von einer Temperaturänderung identisch ist.

Vorzugsweise weisen das erste oder das zweite Spritzgießmaterial entweder PA6 (Polyamid-6) oder ABS/PC (Acrylnitril-Butadien-Styrol-Copolymerisat/Polycarbonat) als Hauptbestandteil auf.

Weiter ist es bevorzugt, dem ersten Spritzgießmaterial einen faserigen Feststoff zur Erhöhung der Steifigkeit zuzumischen. Dies können beispielsweise Mineralfasern, Glasfasern oder Holzfasern sein. Dem zweiten Spritzgießmaterial kann ebenfalls ein solcher faseriger Feststoff zugemischt werden (ggf. in einem anderen Verhältnis), welcher einen Einfluss auf den optischen Eindruck des zweiten Anteils des Spritzgießteils hat; etwa durch eine Änderung der Textur.

Vorzugsweise weist das Spritzgießwerkzeug weiter eine Mehrzahl in die erste Kavität hineinragende Vorsprünge auf. Auf diese Weise können auch komplexe optische Eindrücke hervorgerufen werden. Besonders bevorzugt ist es, mehrere streifenförmig lang gestreckte Vorsprünge weitgehend parallel nebeneinander verlaufen zu lassen. So kann der Eindruck vermittelt werden, dass das Auskleidungsteil aus mehreren Schichten aufgebaut ist; insbesondere dann, wenn diese Vorsprünge entlang einer Kante der ersten Kavität verlaufen.

Im Folgenden soll die Erfindung anhand eines Ausführungsbeispiels näher erläutert werden. Die dabei offenbarten Einzelmerkmale können auch in anderen Kombinationen erfindungswesentlich sein.
- Figur 1: zeigt einen Ausschnitt eines Querschnittes durch ein Spritzgießwerkzeug während eines frühen Verfahrensschrittes.
- Figur 2: zeigt das Spritzgießwerkzeug aus Figur 1 während eines späteren Verfahrensschrittes.
- Figur 3: zeigt das Spritzgießwerkzeug aus den Figuren 1 und 2 während eines noch späteren Verfahrensschrittes.
- Figur 4: zeigt ein in dem Spritzgießwerkzeug aus den Figuren 1-3 hergestelltes Spritzgießteil.
- Figur 5: zeigt einen Teil des Spritzgießteils aus Figur 4 und einen Fräskopf.

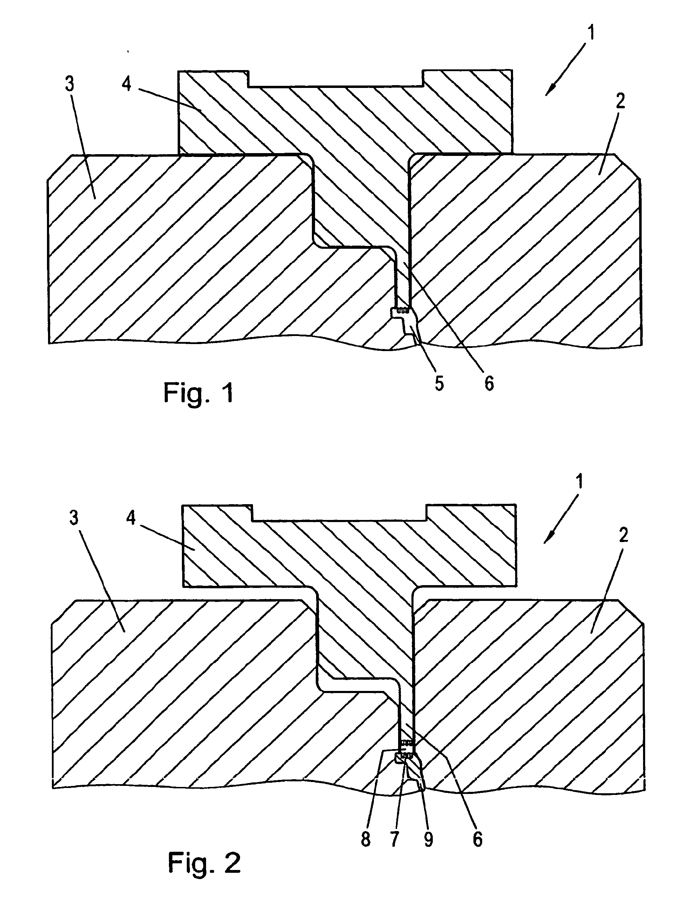

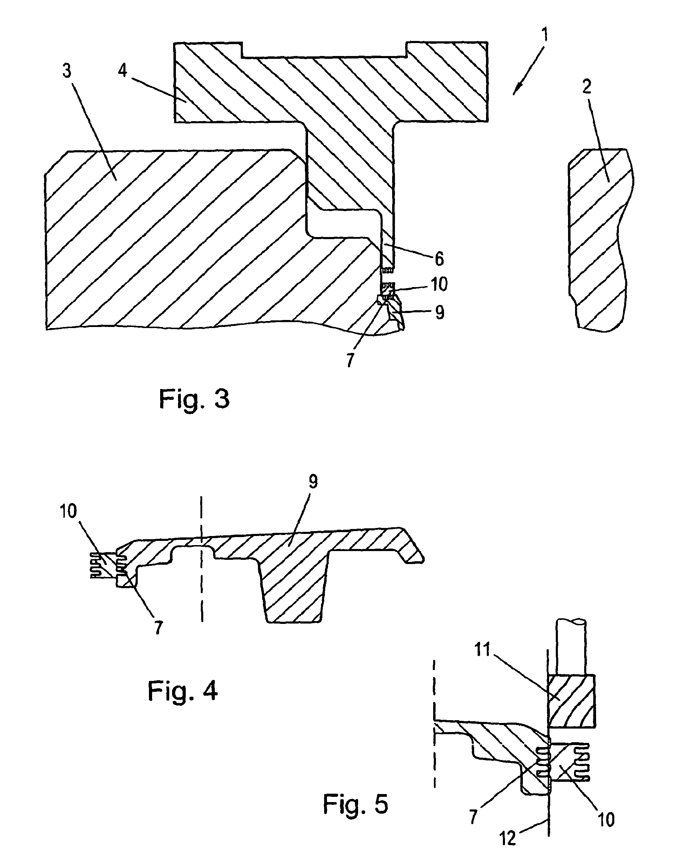

Die Figuren 1 bis 3 zeigen einen Ausschnitt (vgl. die folgenden Erläuterungen zu Figur 4) aus einem Querschnitt durch ein Spritzgießwerkzeug 1 anhand dessen in zeitlicher Folge von Figur 1 zu Figur 3 die Herstellung eines Teils eines Spritzgießteils verfolgt werden kann. Drei Formen 2, 3, 4 des Spritzgießwerkzeuges 1 umfassen eine erste Kavität 5. Die rechte Form 2 wird als Patrize bezeichnet, die linke Form 3 als Matrize und die obere Form 4 als Schieber. Patrize 2, Matrize 3 und Schieber 4 sind derart angeordnet, dass die Kavität 5 nach außen abgeschlossen ist, abgesehen von den notwendigen Öffnungen (nicht gezeigt) zum Einbringen eines ersten Spritzgießmaterials. Der Schieber 4 grenzt mit einem Stempel 6 an die Kavität 5 an. Der Stempel 6 weist dabei drei streifenförmig lang gestreckte Vorsprünge auf, welche in die Kavität 5 hineinragen, die senkrecht zur Zeichenebene lang gestreckt und nach unten hin zunächst flach fortgesetzt ist. Die Vorsprünge des Stempels 6 greifen entsprechend in eine Kante der Kavität 5 ein.

Die erste Kavität 5 wird mit einem ersten Spritzgießmaterial, hier PA6, unter Druck- und Wärmezufuhr gefüllt. Da die Kavität 5 vollständig ausgefüllt wird, prägen sich die Vorsprünge des Stempels 6 in das in der Kavität 5 befindliche Spritzgießmaterial ein. Ist das erste Spritzgießmaterial ausgehärtet, so enthält das Spritzgießwerkzeug 1 einen ersten Anteil 9 des insgesamt herzustellenden Spritzgießteils mit drei parallel zueinander verlaufenden streifenförmigen Hohlformen 7. Dieser erste Anteil des Spritzgießteils weist eine helle Holzfarbe auf.

Alternativ kann statt reinem PA6 auch PA6 mit einer Mineralfaserzumischung zur Erhöhung der Steifigkeit, sog. "gefülltes" PA6, verwendet werden.

In Figur 2 ist der Schieber 4 im Vergleich zu Figur 1 ein Stück herausgezogen, sodass sich zwischen Patrize 2 und Matrize 3 eine zweite Kavität 8 ausgebildet hat. Wo zuvor das Spritzgießwerkzeug 1 die Kavität 5 aufwies, befindet sich nun der erste Anteil 9 des Spritzgießteils. In diesem ersten Anteil 9 befinden sich die drei streifenförmig lang gestreckten Hohlformen 7, welche an die Kavität 8 angrenzen. Diese umfasst die Hohlform 7 dabei in ihrer Gesamtheit.

Die zweite Kavität 8 wird mit einem zweiten Spritzgießmaterial, hier ebenfalls PA6, auch unter Druck- und Wärmezufuhr gefüllt. Dabei wird die gesamte Kavität 8 einschließlich der Hohlformen 7 ausgefüllt. Es wird ein zweiter, aus den Hohlformen 7 hervor ragender, Anteil 10 des insgesamt herzustellenden Spritzgießteils gebildet. Im ausgehärteten Zustand zeigt das zweite Spritzgießmaterial einen dunklen Holzton.

Figur 3 zeigt das Spritzgießwerkzeug 1 schließlich im geöffneten Zustand. Die Patrize 2 ist nach rechts versetzt. Der Schieber 4 ist nach oben versetzt. Die Figur 3 zeigt auch den ausgehärteten zweiten Anteil 10 des insgesamt herzustellenden Spritzgießteils. Das gesamte Spritzgießteil kann leicht aus dem geöffneten Spritzgießwerkzeug 1 entfernt werden.

Figur 4 zeigt einen Querschnitt durch das ausgehärtete und dem Spritzgießwerkzeug 1 entnommene Spritzgießteil mit seinen beiden Anteilen 9 und 10. Der Teil links der gestrichelten Linie entspricht dabei dem Teil des Spritzgießteils, dessen Entstehung in den Figuren 1-3 verfolgt werden konnte. Der Teil rechts der gestrichelten Linie ist durch die nicht in den Figuren 1-3 gezeigte Gestalt der ersten Kavität 5 bedingt.

Figur 5 zeigt einen Teil des Spritzgießteils aus Figur 4. Weiter ist ein Kopf 11 einer Fräsmaschine gezeigt. Mit diesem Kopf 11 wird der aus den Hohlformen 7 hervor ragende Überschuss des zweiten Anteils 10 entlang der zur Veranschaulichung eingezeichneten Linie 12 abgefräst. Die Fräsmaschine ist dabei so eingestellt, dass der Kopf 11 auch 0,02 mm der Oberfläche des ersten Anteils 9 des Spritzgießteils abfräst. Entsprechend ist die die aufgefüllten Hohlformen 7 aufweisende Kante anschließend in der Umgebung der aufgefüllten Hohlformen 7 eben.

Schließlich wird das Spritzgießteil mit einem transparenten Lack überzogen und kann als Innenauskleidungsteil für Kfz dienen.

## Patentansprüche

1. Verfahren zur Herstellung eines Auskleldungsteils für Motorfahrzeuge mit den Schritten:
- Spritzgießen eines ersten Anteils eines Spritzgießteils (9, 10) in einer ersten Kavität (5) in einem Spritzgießwerkzeug (1) mit einem ersten Spritzgleßmaterial, wobei das Spritzgießwerkzeug (1) einen in die erste Kavität (5) hinein ragenden Vorsprung (6) aufweist, sodass der erste Anteil des Spritzgießteils (9, 10) nach seinem Spritzguss eine dem Vorsprung (6) entsprechende Hohlform (7) aufweist, wobei der Vorsprung (6) streifenförmig langgestreckt ist,
- Bilden einer zweiten Kavität (8), welche zumindest einen Teil der Hohlform (7) des ersten Anteils des Spritzgießteils (9, 10) umfasst,
- Spritzgießen eines zweiten Anteils des Spritzgißteils (9, 10) in der zweiten Kavität (8) mit einem zweiten Spritzgießmaterial, sodass das zweite Spritzgießmaterial zumindest einen Teil der Hohlform (7) des ersten Anteils des Spritzgießteils (9, 10) auffüllt,
wobei das ausgehärtete zweite Spritzgießmaterial einen anderen optischen Eindruck hervorruft als das ausgehärtete erste Spritzgießmaterial, wobei die erste Kavität (5) flächig ist
**dadurch gekennzeichnet dass**
der Vorsprung (6) sich entlang einer zu der Dimension mit der geringsten Ausdehnung parallelen Seite der ersten Kavität (5) erstreckt.

2. Verfahren nach Anspruch 1 mit dem weiteren Schritt:
Abtragen eines aus der Hohlform (7) des ersten Anteils des Spritzgießteils (9. 10) hervor ragenden Überschusses des zweiten Anteils des Spritzgießteils (9, 10).

3. Verfahren nach Anspruch 1 oder 2, bei dem auch ein Teil der Oberfläche des ersten Anteils des Spritzgießteils (9, 10) abgetragen wird, in die die Hohlform (7) eingebettet ist.

4. Verfahren nach Anspruch 3, bei dem von der Oberfläche des ersten Anteils des Spritzgießteils (9, 10) bis zu 0,5 mm abgetragen werden.

5. Verfahren nach einem der vorangehenden Ansprüche, bei dem das Spritzgießen des ersten Anteils des Spritzgießteils (9, 10) und des zweiten Anteils des Spritzgießteils (9, 10) in demselben Spritzgießwerkzeug (1) durchgeführt wird.

6. Verfahren nach einem der vorangehenden Ansprüche, bei dem das Spritzgießwerkzeug (1) drei die erste Kavität (5) ausbildende Formen (2, 3, 4) aufweist und die zweite Kavität (8) durch Verschieben einer der Formen (4) gebildet wird.

7. Verfahren nach einem der vorangehenden Ansprüche, bei dem das erste Spritzgießmaterial und das zweite Spritzgießmaterial das gleiche Material als Hauptbestandteil aufweisen.

8. Verfahren nach einem der vorangehenden Ansprüche, bei dem das erste Spritzgießmaterial und das zweite Spritzgießmaterial eines von PA6 und ABS/PC als Hauptbestandteil aufweisen.

9. Verfahren nach einem der vorangehenden Ansprüche, bei dem dem ersten Spritzgießmaterial ein faseriger Feststoff zur Erhöhung der Steifigkeit zugemischt ist.

10. Verfahren nach einem der vorangehenden Ansprüche, bei dem das Spritzgießwerkzeug (1) eine Mehrzahl in die erste Kavität (5) hinein ragende Vorsprünge aufweist.

11. Spritzgießwerkzeug (1) zur Herstellung eines Auskleidungsteils für Motorfahrzeuge mit
einer ersten Kavität (5) zum Spritzgießen eines ersten Anteils eines Spritzgießteils (9, 10) mit einem ersten Spritzgleßmaterial und
einem in die erste Kavität (5) hineinragenden streifenförmig langgestreckten Vorsprung (6), so dass der erste Anteil des Spritzgießteils (9, 10) nach seinem Spritzguss eine dem Vorsprung (6) entsprechende Hohlform (7) aufweist, wobei das Spritzgießwerkzeug (1) dazu ausgelegt ist, eine zweite Kavität (8) zu bilden, welche zumindest einen Teil der Hohlform (7) des ersten Anteils des Spritzgießteils (9, 10) umfasst und
einen zweiten Anteil des Spritzgießteils (9. 10) **in** der zweiten Kavität (8) mit einem zweiten Spritzgießmaterial über Spritzgießen herzustellen, so dass das zweite Spritzgießmaterial zumindest einen Teil der Hohlform (7) des ersten Anteils des Spritzgießteils (9, 10) auffüllt,
wobei die erste Kavität (5) flächig ist
**dadurch gekennzeichnet dass**
der Vorsprung (6) sich entlang einer zu der Dimension mit der geringsten Ausdehnung parallelen Seite der ersten Kavität (5) erstreckt.

12. Spritzgießwerkzeug (1) nach Anspruch 11. ausgelegt zur Durchführung eines Verfahren nach einem der Ansprüchen 1 bis 10.

## Claims

1. A method for producing a covering part for motor vehicles including the steps:
- injection-moulding of a first part of an injection-moulded piece (9,10) in a first cavity (5) in an injection-moulding tool (1) using a first injection-moulding material, wherein said injection-moulding tool (1) comprises a projection (6) projecting into said first cavity (5) such that first part of said injection-moulded piece (9,10) has a hollow shape (7) after the injection-moulding thereof, corresponding to said projection (6), wherein said projection (6) is longitudinally extended in a strip-like manner,
- forming a second cavity (8) comprising at least a part of the hollow shape (7) of said first part of said injection-moulded piece (9,10),
- injection-moulding a second part of said injected-moulded piece (9,10) in said second cavity (8) using a second injection-moulding material such that said second injection-moulding material fills at least a part of said hollow shape (7) of said first part of said injection-moulded piece (9,10),
wherein said second injection-moulding material, in its hardened state, has a different optical appearance than said first injection-moulded material in its hardened state,
wherein said first cavity (5) is flat,
**characterized in that** said projection (6) extends along a side of said first cavity (5) parallel to a dimension having the smallest extension thereof.

2. The method of claim 1 including the step:
removing an excess of said second part of said injection-moulded piece (9,10) projecting from said hollow shape (7) of said first part of said injection-moulded piece (9,10).

3. The method of claim 1 or 2 wherein also a part of a surface of said first part of said injection-moulded piece (9,10) is removed, in which surface said hollow shape (7) is embedded.

4. The method of claim 3 wherein up to 0.5 mm are removed from said surface of said first part of said injection-moulded piece (9,10).

5. The method of one of the preceding claims wherein said injection-moulding of said first part of said injection-moulded piece (9,10) and of said second part of said injection-moulded piece (9.10) is performed in said same injection-moulding tool (1).

6. The method of one of the preceding claims wherein said injection-moulding tool (1) comprises three moulds (2,3,4) forming said first cavity (5), and said second cavity (8) is formed by displacing one of said moulds (4).

7. The method of one of the preceding claims wherein said first injection-moulding material and said second injection-moulding material have the same material as a main constituent.

8. The method of one of the preceding claims wherein said first injection-moulding material and said second injection-moulding material have one of PA6 and ABS/PC as a main constituent.

9. The method of one of the preceding claims wherein a fibrous solid substance is admixed to a said first injection-moulding material for increasing the rigidity thereof.

10. The method of one of the preceding claims wherein said injection-moulding tool (1) comprises a plurality of projections projecting into said first cavity (5).

11. An injection-moulding tool (1) for producing a covering part for motor vehicles, having
a first cavity (5) for injection-moulding a first part of an injection-moulded piece (9,10) using a first injection-moulding material and
a projection (6) projecting into said first cavity (5) and extending longitudinally in a strip-like manner, such that said first part of said injection-moulded piece (9,10) has a hollow shape (7) corresponding to said projection (6) after the injection-moulding thereof,
wherein said injection-moulding tool (1) is adapted to form a second cavity (8) comprising at least a part of said hollow shape (7) of said first part of said injection-moulded piece (9,10) and
to produce a second part of said injection-moulded piece (9,10) in said second cavity (8) using a second injection-moulding material by injection-moulding such that said second injection-moulding material fills at least a part of said hollow shape (7) of said first part of said injection-moulded piece (9,10), wherein said first cavity (5) is flat,
**characterized in that** said projection (6) extends along a side of said first cavity (5) parallel to a dimension having the smallest extension thereof.

12. The injection-moulding tool (1) of claim 11 adapted for performing the method of one of claims 1 to 10.

## Revendications

1. Procédé pour fabriquer une partie d'habillage pour des véhicules à moteur comprenant les étapes suivantes:
- moulage par injection d'une première fraction d'une pièce moulée par injection (9, 10) dans une première cavité (5) dans un outil de moulage par injection (1) avec un premier matériau de moulage par injection, l'outil de moulage par injection (1) présentant une partie saillante (6) dépassant à l'intérieur de la première cavité (5), de sorte que la première fraction de la pièce moulée par injection (9, 10) présente après son moulage par injection une forme creuse (7) correspondant à la partie saillante (6), la partie saillante (6) étant étirée en longueur en forme de bande,
- formation d'une seconde cavité (8), qui comporte au moins une partie de la forme creuse (7) de la première fraction de la pièce moulée par injection (9, 10),
- moulage par injection d'une seconde fraction de la pièce moulée par injection (9, 10) dans la seconde cavité (8) avec un second matériau de moulage par injection de sorte que le second matériau de moulage par injection remplit au moins une partie de la forme creuse (7) de la première fraction de la pièce moulée par injection (9, 10),
le second matériau de moulage par injection durci entraîne une autre impression visuelle que le premier matériau de moulage par injection durci,
la première cavité (5) étant plane, **caractérisée en ce que** la partie saillante (6) s'étend le long d'un côté, parallèle à la dimension présentant la plus faible extension, de la première cavité (5).

2. Procédé selon la revendication 1 présentant l'autre étape suivante:
enlèvement d'un excédent, dépassant de la forme creuse (7) de la première fraction de la pièce moulée par injection (9, 10), de la seconde fraction de la pièce moulée par injection (9, 10).

3. Procédé selon la revendication 1 ou 2, sur lequel également une partie de la surface de la première fraction de la pièce moulée par injection (9, 10) est enlevée, surface dans laquelle la forme creuse (7) est enfoncée.

4. Procédé selon la revendication 3, dans lequel on enlève jusqu'à 0,5 mm de la surface de la première fraction de la pièce moulée par injection (9,10).

5. Procédé selon l'une quelconque des revendications précédentes, dans lequel le moulage par injection de la première fraction de la pièce moulée par injection (9, 10) et de la seconde fraction de la pièce moulée par injection (9, 10) est effectué dans le même outil de moulage par injection (1).

6. Procédé selon l'une quelconque des revendications précédentes, dans lequel l'outil de moulage par injection (1) présente trois moules (2, 3, 4) formant la première cavité (5) et la seconde cavité (8) est formée par le déplacement de l'une des moules (4).

7. Procédé selon l'une quelconque des revendications précédentes, dans lequel le premier matériau de moulage par injection et le second matériau de moulage par injection présentent le même matériau que le constituant principal.

8. Procédé selon l'une quelconque des revendications précédentes, dans lequel le premier matériau de moulage par injection et le second matériau de moulage par injection présentent un matériau de PA6 et de ABS/PC comme constituant principal.

9. Procédé selon l'une quelconque des revendications précédentes, dans lequel une matière solide fibreuse est mélangée au premier matériau de moulage par injection pour améliorer la rigidité.

10. Procédé selon l'une quelconque des revendications précédentes, dans lequel l'outil de moulage par injection (1) présente une pluralité de parties saillantes dépassant à l'intérieur de la première cavité (5).

11. Outil de moulage par injection (1) pour fabriquer une partie d'habillage pour des véhicules à moteurs comprenant:
une première cavité (5) pour le moulage par injection d'une première fraction d'une pièce moulée par injection (9, 10) avec un premier matériau de moulage par injection et
une partie saillante (6) étirée en longueur en forme de bande, dépassant à l'intérieur de la première cavité (5), de sorte que la première fraction de la pièce moulée par injection (9, 10) présente après son moulage par injection une forme creuse (7) correspondant à la partie saillante (6)
l'outil de moulage par injection (1) étant conçu pour former une seconde cavité (8) qui comprend au moins une partie de la forme creuse (7) de la première fraction de la pièce moulée par injection (9, 10) et
pour fabriquer par moulage par injection une seconde fraction de la pièce moulée par injection (9, 10) dans la seconde cavité (8) avec un second matériau de moulage par injection de sorte que le second matériau de moulage par injection remplit au moins une partie de la forme creuse (7) de la première fraction de la pièce moulée par injection (9, 10),
la première cavité (5) étant plane, **caractérisée en ce que** la partie saillante (6) s'étend le long d'un côté, parallèle à la dimension présentant la plus faible extension, de la première cavité (5).

12. Outil de moulage par injection (1) selon la revendication 11, conçu pour la mise en oeuvre du procédé selon l'une quelconque des revendications 1 à 10.
